# EUROPEAN PATENT SPECIFICATION

(11) **EP 3 287 890 B1**
(45) Date of publication and mention of the grant of the patent: **21.07.2021**
(21) Application number: 17184491.3
(22) Date of filing: 02.08.2017
(51) Int. Cl.: G06F 3/147, G06Q 10/08, G06Q 30/06

(54) **ELECTRONIC SHELF LABEL INFORMATION PROCESSING SYSTEM AND METHOD**
SYSTEM UND VERFAHREN ZUR VERARBEITUNG DER INFORMATIONEN EINES ELEKTRONISCHEN REGALETIKETTS
SYSTÈME ET PROCÉDÉ DE TRAITEMENT D'INFORMATIONS D'ÉTIQUETTE DE RAYON ÉLECTRONIQUE

(30) Priority: 24.08.2016 CN 201610729078
(43) Date of publication of application: 28.02.2018
(73) Proprietor: Hanshow Technology Co., Ltd., Jiaxing, Zhejiang 314031 (CN)
(72) Inventor: HOU, Shiguo, Chaoyang District, Beijing (CN); SHEN, Ming, Chaoyang District, Beijing (CN); LI, Liangyan, Chaoyang District, Beijing (CN)
(74) Representative: Boult Wade Tennant LLP

(56) References cited:
- EP-A1- 2 314 181
- EP-A1- 2 924 642
- KR-A- 20120 028 177
- US-A1- 2005 218 218
- US-A1- 2005 284 933
- US-A1- 2010 115 302

## Description

### TECHNICAL FIELD

The present disclosure relates to the technical field of data processing, and particularly, to an electronic shelf label information processing system and method.

### BACKGROUND

A remote controller is a kind of wireless transmitting device, which encodes key pressing information by modern digital encoding technologies, and emits optical waves by an infrared diode, the optical waves are converted by an infrared receiver of a receiver from an infrared signal received thereby into an electrical signal, the electrical signal is transmitted to a processor to be decoded, corresponding instructions are demodulated so as to meet the requirements of controlling a device such as a set-top box to complete necessary operations. An access point AP is a wireless data transceiver for the wireless network and is a core of the wireless network. Generally, the remote controller is used for controlling the device such as the set-top box, and the AP performs a data interaction with the device in the wireless network, while the remote controller cannot interact with the AP. Moreover, in the related art, the remote controller is only used to trigger an electronic shelf label, and the electronic shelf label does not transmit data to the remote controller, and the remote controller and the electronic shelf label cannot perform a bidirectional data interaction.

Document EP2314181A1 discloses an electronic shelf label system, a product price management device, a portable terminal device, an electronic shelf label device, a product price management method, a product price update method, a product price management program, and a product price update program, which are capable of changing display of an electronic shelf label in a place where the electronic shelf label is installed. A handy terminal reads, from a shelf label, identification information of the shelf label, and transmits, via a relay station to a communication controller, price information of a product that is input to the handy terminal itself and the identification information of the shelf label. The communication controller stores the identification information of the shelf label and the price information in association with each other, updates the price information associated with the same identification information as the received identification information, as the received price information, and transmits, via the relay station, the updated price information to the shelf label. The shelf label displays the received price information.

Document US20050218218A1 discloses an electronic shelf label system according to the preamble of claim 1.

Document KR20120028177 discloses an electronic shelf label system wherein WiFi or Zigbee is used between a remote controller and the main server and between the main server and the electronic shelf label device and wherein a magnetic sensor is used to activate an electronic shelf label device by interaction of a magnet of the remote controller.

### SUMMARY

An embodiment of the present disclosure provides an electronic shelf label information processing system, which makes a data interaction be performed between the remote controller and the electronic shelf label, and between the remote controller and the access point AP.

The electronic shelf label information processing system comprises: an access point AP, an electronic shelf label, a remote controller and a background server;
the AP is configured to receive electronic shelf label display information provided by the background server, and transmit the electronic shelf label display information to the electronic shelf label;
the electronic shelf label is configured to display according to the electronic shelf label display information;
the remote controller is configured to acquire electronic shelf label related information from the electronic shelf label, and provide the electronic shelf label related information to the AP;
the AP is further configured to transmit the electronic shelf label related information to the background server; and
the background server is configured to process the electronic shelf label related information,
wherein the electronic shelf label comprises a communication module, a magnetic control switch, a Micro Control Unit (MCU), a display screen and an indicator lamp;
the communication module is configured to receive the electronic shelf label display information provided by the AP, and to transmit the electronic shelf label display information to the MCU;
the MCU is configured to control the display screen and/or the indicator lamp for displaying, according to the electronic shelf label display information; and
wherein the electronic shelf label is arranged to store the electronic shelf label related information;
wherein the remote controller is a magnetic control device;
the magnetic control switch and the MCU are configured so that the magnetic control switch, after being triggered by the remote controller, triggers the MCU to acquire the electronic shelf label related information, and makes the MCU provide the electronic shelf label related information to the remote controller through the communication module by using a 2.4G wireless communication protocol,
and wherein the remote controller is configured to receive the electronic shelf label related information by using a 2.4G wireless communication protocol.

An embodiment of the present disclosure provides an electronic shelf label information processing method, which makes an interaction be performed between the remote controller and the electronic shelf label, and between the remote controller and the access point AP.

The electronic shelf label information processing method comprises:
receiving, by an AP, electronic shelf label display information provided by a background server, and transmitting, by the AP, the electronic shelf label display information to an electronic shelf label;
displaying, by the electronic shelf label, according to the electronic shelf label display information;
acquiring, by a remote controller, electronic shelf label related information from the electronic shelf label, and providing, by the remote controller, the electronic shelf label related information to the AP;
transmitting, by the AP, the electronic shelf label related information to the background server; and
processing, by the background server, the electronic shelf label related information,
wherein acquiring, by the remote controller, the electronic shelf label related information from the electronic shelf label comprising:
   acquiring, by the remote controller, the electronic shelf label related information from the electronic shelf label, after triggering a magnetic control switch in the electronic shelf label,
   wherein the electronic shelf label comprises a communication module, the magnetic control switch, a Micro Control Unit (MCU), a display screen and an indicator lamp, wherein the communication module receives the electronic shelf label display information provided by the AP, and transmits the electronic shelf label display information to the MCU, the MCU controls the display screen and/or the indicator lamp for displaying, according to the electronic shelf label display information, wherein the electronic shelf label is arranged to store the electronic shelf label related information, wherein the remote controller is a magnetic control device, and the magnetic control switch, after being triggered by the remote controller, triggers the MCU to acquire the electronic shelf label related information, and makes the MCU provide the electronic shelf label related information to the remote controller through the communication module by using a 2.4G wireless communication protocol, and wherein the remote controller is configured to receive the electronic shelf label related information by using a 2.4G wireless communication protocol.

In embodiments of the present disclosure, the remote controller can acquire electronic shelf label related information from the electronic shelf label, and transmit the electronic shelf label related information to the AP. As compared with the related art, the present disclosure realizes the data interaction between the remote controller and the AP, and the data interaction between the remote controller and the electronic shelf label.

### BRIEF DESCRIPTION OF DRAWINGS

In order to more clearly explain the technical solutions in the embodiments of the present disclosure or the related art, the drawings to be used in the descriptions of the embodiments or the related art are briefly introduced as follows. Obviously, the drawings used in the following descriptions just illustrate some embodiments of the present disclosure, and a person skilled in the art can further contemplate other drawings from these drawings without paying any creative effort.
Fig. 1 is a structural schematic diagram of an electronic shelf label information processing system provided by an embodiment of the present disclosure;
Fig. 2 is a structural schematic diagram of an electronic shelf label provided by an embodiment of the present disclosure; and
Fig. 3 is a flow chart of an electronic shelf label information processing method provided by an embodiment of the present disclosure.

### DESCRIPTION OF EMBODIMENTS

The technical solutions in the embodiments of the present disclosure are clearly and completely described as follows in conjunction with the drawings of the embodiments of the present disclosure. Obviously, the embodiments as described are just a part, rather than all, of the embodiments of the present disclosure. Based on the embodiments of the present disclosure, all other embodiments obtained by a person skilled in the art without paying any creative effort shall fall within the protection scope of the present disclosure.

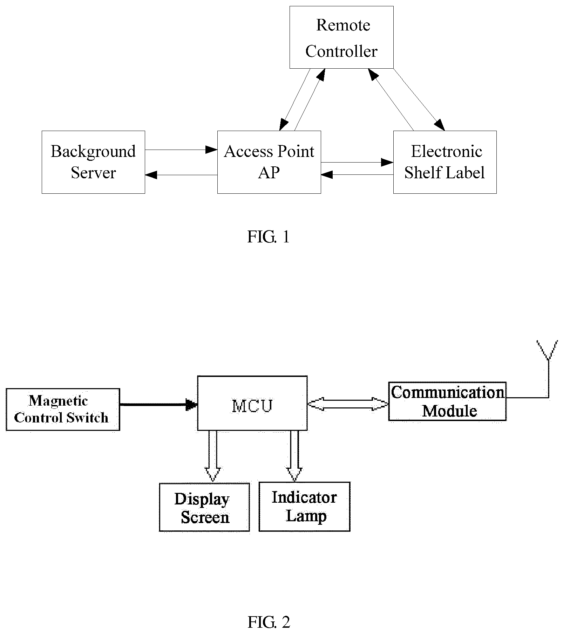

In an embodiment of the present disclosure, an electronic shelf label information processing system is provided. As illustrated in Fig. 1, the electronic shelf label information processing system comprises an Access Point AP, an electronic shelf label, a remote controller and a background server. The AP is configured to receive electronic shelf label display information provided by the background server, and transmit the electronic shelf label display information to the electronic shelf label. The electronic shelf label is configured to display according to the electronic shelf label display information. The remote controller is configured to acquire electronic shelf label related information from the electronic shelf label, and provide the electronic shelf label related information to the AP. The AP is further configured to transmit the electronic shelf label related information to the background server. The background server is configured to process the electronic shelf label related information.

In implementation, in an example which is useful for understanding the invention, the electronic shelf label related information may comprise a display object identity in the electronic shelf label display information. The remote controller is further configured to provide a type of a display object operation to the AP. The AP transmits the display object identity and the type of the display object operation to the background server. The background server performs an operation on display object information according to the display object identity and the type of the display object operation. The background server is further configured to update the electronic shelf label display information according to an operation result of the operation on the display object information, and provide the updated electronic shelf label display information to the AP. The AP is further configured to transmit the updated electronic shelf label display information to the electronic shelf label. The electronic shelf label is further configured to display according to the updated electronic shelf label display information.

The remote controller is further configured to provide remote controller input information to the AP, and the AP is further configured to transmit the remote controller input information to the background server. The background server is further configured to process the remote controller input information. In an example which is useful for understanding the invention, the remote controller is further configured to provide check information to the AP, and the AP is further configured to perform integrity check on the information received from the remote controller according to the check information.

The electronic shelf label related information acquired by the remote controller from the electronic shelf label may further comprise an electronic shelf label identity. The AP is further configured to transmit the electronic shelf label identity to the background server. The background server is further configured to associate the electronic shelf label identity with the remote controller input information.

In an example which is useful for understanding the invention, the electronic shelf label related information acquired by the remote controller from the electronic shelf label may further comprise parameter information of the electronic shelf label, which refers to parameter information of the electronic shelf label itself, such as remaining amount of power of the electronic shelf label. The remote controller provides the remaining amount of power of the electronic shelf label to the AP, the AP transmits the remaining amount of power of the electronic shelf label to the background server, and the background server performs corresponding process according to the remaining amount of power of the electronic shelf label.

In implementation, in this embodiment, the operation between the AP and the electronic shelf label, the operation between the electronic shelf label and the remote controller, the operation between the AP and the remote controller, and the operation between the AP and the background server are all bidirectional. It is a transmitting-receiving state between the AP and the electronic shelf label. In an example which is useful for understanding the invention, after receiving the information provided by the AP, the electronic shelf label returns a response message to the AP. For example, after receiving the electronic shelf label display information and updated electronic shelf label display information provided by the AP, the electronic shelf label may return a response message to the AP. It is a transmitting-receiving state between the AP and the remote controller. After receiving the information provided by the remote controller, the AP also returns a response message to the remote controller. For example, after receiving the type of the display object operation, the display object identity, the remote controller input information and the check information provided by the remote controller, the AP may return a response message to the remote controller. The response message may comprise Acknowledgement (ACK) or a heartbeat message, wherein the ACK is an acknowledge character which is a transmission type control character transmitted from a receiving station to a transmitting station during data communication and indicates a confirmation that the transmitted data having been received correctly. The heartbeat message is a message sent from a transmitting station to a receiving station, which allows the receiving station to determine whether or when the transmitting station has a fault or is terminated.

In implementation, as illustrated in Fig. 2, the electronic shelf label comprises a communication module, a magnetic control switch, a Micro Control Unit (MCU), a display screen and an indicator lamp. The communication module is configured to receive electronic shelf label display information provided by an AP and transmit the electronic shelf label display information to the MCU. The MCU is configured to control the display screen and/or the indicator lamp for displaying according to the electronic shelf label display information. The magnetic control switch is configured to trigger the MCU to acquire electronic shelf label related information after being triggered by the remote controller, and provide the electronic shelf label related information to the remote controller through the communication module.

In implementation, the AP and the electronic shelf label interact by using a 2.4G wireless communication protocol. That is, the Access Point AP (a relay for the electronic shelf label to communicate with the system) and the communication module of the electronic shelf label communicate with each other by using a 2.4G wireless communication protocol, wherein the communication module may be a Radio Frequency (RF) communication module. The usage of 2.4GHz technology is mainly attributed to the technological maturity, and a standard communication frequency band (2.4GHz ISM) is internationally planned. Thus, based on the characteristics of 2.4G radio frequency, it is easy to realize a compact design (an antenna can be designed to be very small and exquisite). Meanwhile, it is easy to realize an omni-directional communication ability without blind angle (the antenna can realize an omni-directional communication), which allows the installation of the electronic shelf label to be convenient and the cost of the implementation and maintenance to be low. In addition, an uplink channel and a downlink channel of the 2.4GHz technology have substantially the same capability, and the uplink channel has a burst capability.

In addition, the 2.4G wireless communication protocol may also be used for the interaction between the AP and the remote controller and the interaction between the remote controller and the electronic shelf label.

In implementation, the MCU in the existed electronic shelf label is in an ultra-low power consumption state and does not start operating immediately. In view of this, in this embodiment, the magnetic control switch is used to trigger the MCU to start or end operating. There are many types of magnetic control switches, such as a reed switch, and a Hall switch, etc. After being contacted by an external magnetic control device (e.g., an external remote controller), the magnetic control switch is closed or opened immediately, and a trigger signal is transmitted to the MCU such that the MCU starts or ends operating immediately. It is instantaneous to trigger the MCU with the magnetic control switch. In addition to being triggered by using the magnetic control switch, the MCU may also be controlled by a 2.4G RF trigger signal (first trigger information) provided by the AP to start or end operating.

In implementation, in this embodiment, the time for the communication module to receive the electronic shelf label display information and to transmit it to the MCU is flexible. For example, when the MCU is triggered by the magnetic control switch to start operating, the communication module may firstly receive the electronic shelf label display information provided by the AP, and transmit the electronic shelf label display information to the MCU, and then the electronic shelf label display information can be used directly after the magnetic control switch triggers the MCU to start operating, which is equivalent to presetting the electronic shelf label display information into the MCU. Alternatively, the magnetic control switch may firstly trigger the MCU to start operating, and then the communication module receives the electronic shelf label display information provided by the AP, and transmits the electronic shelf label display information to the MCU. For example, when the MCU is triggered by the AP to start operating, the communication module may receive the electronic shelf label display information provided by the AP, and transmit the electronic shelf label display information to the MCU, after receiving the first trigger information provided by the AP and triggering the MCU to start operating through the first trigger information. Or, the communication module may firstly receive the electronic shelf label display information provided by the AP, and transmit the electronic shelf label display information to the MCU, and then receive the first trigger information provided by the AP, and trigger the MCU to start operating through the first trigger information, thereafter the communication module may directly use the electronic shelf label display information, and this is equivalent to presetting the electronic shelf label display information into the MCU.

In implementation, in this embodiment, the electronic shelf label display information may comprise control information and display content (object information to be displayed). Since the MCU can control both the display screen and the indicator lamp, after starting operating, the MCU firstly determines whether the display screen, or the indicator lamp, or both of them are to be controlled, according to the control information in the electronic shelf label display information. The MCU is specifically configured to: control the display screen to display the display content in the electronic shelf label display information, when it is determined according to the control information in the electronic shelf label display information that the display screen needs to be controlled for displaying; and control the indicator lamp to display the display content in the electronic shelf label display information, when it is determined according to the control information in the electronic shelf label display information that the indicator lamp needs to be controlled for displaying.

In implementation, in this embodiment, when the MCU determines to control the display screen for displaying, the MCU may be triggered by making an external magnetic control device approach (or contact) the electronic shelf label to control the display screen to perform a page switching. Alternatively, the MCU controls the display screen to perform a page switching according to preset page turning information contained in the display content in the electronic shelf label display information. Alternatively, the communication module receives second trigger information provided by the AP, and controls the display screen to perform a page switching after the second trigger information triggering the MCU to start operating. The preset page turning information may comprise information such as the number of pages, duration, etc. of screen switching. When the electronic shelf label is applied to a large shopping mall and supermarket, the display content of the electronic shelf label display information may comprise commodity information, such as name, place of origin, price, unit, etc. of the commodity. The content to be displayed on each page may further comprise information such as one dimensional-code, two-dimensional code, picture, etc. In addition, the discount information of commodities and the like may also be comprised.

In implementation, there are various kinds of display screens, such as a LED display screen and a liquid crystal display (LCD), etc. The LCD is mainly used in the existing industry. In this embodiment, the display screen may also be an LCD, but the LCD has the following problems: there is a viewing angle of display, the contrast ratio cannot reach an optimal status, and the power consumption is high, etc. With respect to the problems existing in the LCD, the display screen of the present disclosure may also be an Electronic Paper Display (EPD). The EPD electronic paper technology well solves those problems. Firstly, in the aspect of display, the EPD has no viewing angle problem, and its contrast ratio is nearly completely the same as that of paper printing, so that the EPD is very suitable for the exhibition type application scene such as the large shopping mall and supermarket; and meanwhile, such high contrast ratio leads to smoother use of the one-dimensional code and the two-dimensional code, and facilitates the use of informationzation of customer, such as code scanning and online payment, etc. Secondly, in the aspect of power consumption, with extremely low power consumption and almost no power being consumed, the EPD is very suitable for application scenes requiring low power consumption in a long time. A better display effect can be provided to customers by using the EPD.

In implementation, in this embodiment, the electronic shelf label display information may comprise preset flickering color, flickering frequency and/or flickering duty ratio. When the MCU controls the indicator lamp for displaying, the MCU may control the indicator lamp according to the preset flickering color, flickering frequency and/or flickering duty ratio (referring to a ratio of time period for lamp ON to time period for lamp OFF). Since there may be various kinds of indicator lamps, such as light emitting diodes (LEDs) of different colors, red, green, blue-based LEDs (RGB LEDs), etc., thus the ways by which the MCU controls different kinds of indicator lamps are different. For example, when the indicator lamps are a plurality of LEDs of different colors, the MCU controls, according to the preset flickering color, flickering frequency and/or flickering duty ratio, an LED of a corresponding color among the plurality of LEDs of different colors to flicker. When the indicator lamps are RGB LEDs, the MCU controls, according to the preset flickering color, flickering frequency and/or flickering duty ratio, the RGB LEDs to emit light of corresponding color and flicker. For instance, in a case where the electronic shelf label is applied to the large shopping mall and supermarket, the customer defines that the red lamp flickers and the flickering duty ratio is 30 ms on/1s off, then the MCU controls a single red LED to flicker in the manner of 30 ms on/1s off, or controls the RGB LEDs to emit red light and then flicker in the manner of 30 ms on/1s off; the customer defines that the green lamp flickers and the flickering duty ratio is 1 ms on/30 s off, then the MCU controls a single green LED to flicker in the manner of 1 ms on/30 s off, or controls the RGB LEDs to emit green light and then flicker in the manner of 1 ms on/30 s off.

In implementation, all the display contents in the existed electronic shelf label are stored in a Random Access Memory (RAM) of the MCU. The RAM cannot reserve data when the power is off, and the data stored therein is lost. In view of this, in this embodiment, the electronic shelf label may further comprise a storage device for storing the electronic shelf label display information. The storage device does not lose data when the power is off, and after the electronic shelf label is powered on to operate again, the data lost in the RAM when the power is off can be recovered. Specifically, after receiving the electronic shelf label display information provided by the AP, the communication module transmits the electronic shelf label display information to the storage device in addition to transmitting to the MCU. When the electronic shelf label is powered on again after the power off, the MCU can acquire corresponding electronic shelf label display information when power off from the storage device.

In the following, the electronic shelf label information processing system is applied to a practical scene and the function thereof is described in details.

1. The electronic shelf label information processing system in the embodiment of the present disclosure is applied to a goods replenishment scene of a large shopping mall and supermarket.

Currently, the goods replenishment operation of the store performed by the shop assistants is still manually recording, and then additionally recording relevant contents at the background. After the electronic shelf label information processing system in the embodiment of the present disclosure being set up, commodity information (electronic shelf label display information) of each commodity provided by the background server can be issued to the electronic shelf label via the AP, wherein the commodity information comprises inventory information. One electronic shelf label displays the commodity information of one commodity which can be updated every day or every hour. After receiving the commodity information, the electronic shelf label returns an ACK or a heartbeat message to the AP to confirm that the commodity information is correctly received. When the quantity of inventory is in shortage or the replenished goods arrive, a shop assistant may be prompted that the goods are not enough or the goods shall be replenished immediately, by means of LED flickering or screen flickering on the electronic shelf label, and the shop assistant shall make confirmation of the shortage of the goods and replenish the goods. Once the replenishment of the goods is completed, the shop assistant may turn off the LED lamp flickering or the screen flickering on the electronic shelf label through a remote controller, and transmit, through the remote controller, a goods replenishment information data packet to the AP which checks the integrity of the goods replenishment information data packet, and returns an ACK or a heartbeat message to the remote controller after checking to confirm the integrity of the goods replenishment information data packet. Subsequently, the AP transmits the goods replenishment information data packet to the background server which modifies the inventory information according to the data in the goods replenishment information data packet, and meanwhile records the shop assistant who completes the operation, the time when the operation is completed and the like, in order for efficient management of stores.

The format of the goods replenishment information data packet transmitted from the remote controller to the AP is shown in Table 1.

**Table 1**

| 1B | 1B | 4B | 4B | 4B | 2B |
|---|---|---|---|---|---|
| Packet type: Goods replenishment | Packet length | Shop assistant identity ID | Goods information | Reserved information: Quantity of replenished goods | CRC check |

The "display object operation type" refers to "Packet type: Goods replenishment", which represents the goods replenishment action; the "shop assistant identity ID" is configured to identify the person who completes the job; the "display object identity" refers to "goods information", which represents what kind of goods is replenished by the shop assistant; the "goods information" origins from the interaction between the remote controller and the electronic shelf label, and is acquired by the remote controller through a 2.4GHz wireless channel when the remote controller touches the electronic shelf label and turns off the LED lamp or the screen flickering; the "reserved information" may carry the quantity of replenished goods, which is inputted through the keys of the remote controller. The check information is the Cyclic Redundancy Check (CRC) so as to check the integrity of the data in the goods replenishment information data packet.

2. The electronic shelf label information processing system in the embodiment of the present disclosure is applied to the goods inspection scene of a large shopping mall and supermarket.

When a shop assistant makes a tour inspection of the goods on the shelf, firstly the remote controller acquires goods information from an electronic shelf label of a corresponding commodity by touching the electronic shelf label. Next, the remaining quantity of the goods on the shelf is inputted through the keys of the remote controller. The information is transmitted to the background server through the AP after being packaged, and the background server may record the remaining quantity of the goods on the shelf according to the information, for reminding goods replenishment when the inventory is shortage.

The format of goods inspection information data packet transmitted from the remote controller to the AP is shown in Table 2:

**Table 2**

| 1B | 1B | 4B | 4B | 4B | 2B |
|---|---|---|---|---|---|
| Packet type: Goods inspection | Packet length | Shop assistant identity ID | Goods information | Reserved information: Remaining quantity of goods on the shelf | CRC check |

The "display object operation type" refers to "Packet type: Goods inspection"; the "display object identity" refers to "goods information", which represents what kind of goods is inspected by the shop assistant; and the "reserved information" represents the remaining quantity of the goods on the shelf inputted through the keys of the remote controller.

3. The electronic shelf label information processing system in the embodiment of the present disclosure is applied to the bulk goods weighing scene of a large shopping mall and supermarket.

Currently, Personal Digital Assistant (PDA) gun is used for the management of the bulk goods weighing, and meanwhile some wireless technologies can also be feasible. For example, by changing the shelf label of a bulk goods from a paper shelf label into an electronic shelf label with a vibration sensor integrated therein, when a customer selects a certain goods, the shop assistant strokes the electronic shelf label so that the shelf label uploads or transmits information to an electronic scale, and then the electronic scale acquires price information of corresponding commodity from the system. The technical characteristics of the above vibration manner are based on the vibration sensor, and a certain stroking strength is required to meet the requirements of triggering. Thus, the shop assistant who performs the above operation hundreds or even thousands of times every day has a very poor experience. In addition, during the commodity stacking or the collision between a person and the electronic shelf label, the vibration sensor may be falsely triggered. The sensor cannot identify what the source that causes the vibration is, it may lead to false uploading of the commodity information and even wrong processing. Thus, such technology is not a technology with good experience and strong practicability.

The problems in the related art can be overcome by employing the electronic shelf label information processing system in the embodiment of the present disclosure. For example, when a customer selects a certain commodity and wants to weigh it, the shop assistant can acquire the goods information through a 2.4GHz communication channel just by touching a corresponding electronic shelf label with a hand-held remote controller. The goods information is automatically transmitted from the remote controller to the weighing electronic scale (with an AP built in), and displayed on the display screen of the electronic scale at the same time. After the electronic scale acquires the unit price of the goods from the background server according to the "goods information", the shop assistant only needs to place the bulk goods on the electronic scale, and then the shop assistant can complete the weighing and print a price label based on the unit price. By employing the electronic shelf label information processing system in the embodiment of the present disclosure, only two steps are needed to complete the commodity weighing process, thus the efficiency is high and the error rate is low.

The format of the bulk goods information transmitted from the remote controller to the AP is shown in Table 3:

**Table 3**

| 1B | 1B | 4B | 4B | 4B | 2B |
|---|---|---|---|---|---|
| Packet type: Bulk goods information | Packet length | Shop assistant identity ID | Goods information | Reserved information | CRC check |

The "display object operation type" refers to "Packet type: Bulk goods information"; the "display object identity" refers to "goods information", which represents what kind of goods is weighed by the shop assistant; and the "reserved information" herein is empty, which represents no information is inputted through the keys of the remote controller.

4. The electronic shelf label information processing system in the embodiment of the present disclosure is applied to the bulk goods price modification scene of a large shopping mall and supermarket.

For an area of bulk goods, generally, the price is adjusted at any time based on the freshness of products. Based on similar reasons, during bulk goods selling, the shop assistant often manually inputs the bulk goods information and prints a price label of the bulk goods, which wastes time and brings about poor experiences to the customers.

The electronic shelf label information processing system in the embodiment of the present disclosure is used to modify the price of the bulk goods, the process of the price adjustment can be accelerated to provide a convenient service for the store. The system can directly modify the price information displayed on the electronic shelf label through the remote controller, and the modification of the information is based on the data communication between the remote controller and the electronic shelf label. The initiator of the communication is the remote controller. Firstly, the shop assistant inputs the price that needs to be modified into the remote controller, and then touches the electronic shelf label with the remote controller, and triggers the data communication between the remote controller and the electronic shelf label through the magnetic control switch. The remote controller firstly receives the goods information, and then transmits the new price information and the goods information to the AP after packaging the new price information and the goods information. After receiving the new price information and goods information, the AP synchronizes the new price information to the background server, and the background server replaces the previous price information with the new price information, and transmits the new price information and the goods information to the electronic shelf label for displaying, and this facilitates the stores to manage the prices and the sales amount. Alternatively, the remote controller firstly receives the electronic shelf label identity, and then transmits the new price information and the electronic shelf label identity to the AP after packaging the new price information and the electronic shelf label identity. After receiving the new price information and the electronic shelf label identity, the AP synchronizes the new price information to the background server, and the background server associates the new price information with the electronic shelf label identity, and then transmits the new price information to the corresponding electronic shelf label for displaying. The background server also searches for corresponding commodity information according to the electronic shelf label identity, and replaces the previous price information with the new price information, and this facilitates the stores to manage the prices and the sales amount. In addition, the new price information can also be directly transmitted to the electronic shelf label, the electronic shelf label directly modifies the price content displayed by the display screen according to the new price information.

The data packet format of price changing of the bulk goods transmitted from the remote controller to the AP is shown in Table 4:

**Table 4**

| 1B | 1B | 4B | 4B | 4B | 2B |
|---|---|---|---|---|---|
| Packet type: Bulk goods price | Packet length | Shop assistant identity ID | Goods information | Price information | CRC check |

The "display object operation type" refers to "Packet type: Bulk goods price", upon reception of which the electronic shelf label adjusts the price displayed on the screen; the "display object identity" refers to "goods information", which represents the price of what kind of goods is modified by the shop assistant; and the "reserved information" herein is the new price information inputted through the keys of the remote controller.

The above are some application scenes based on the electronic shelf label information processing system in the embodiment of the present disclosure. In the shopping mall and supermarket, the shop assistants are often engaged in repetitive works, thus portable, convenient and flexible applications lead to more efficient work. The remote controller in this system uses a very portable design while supporting a one-key work mode. The workflow of this mode is as follows: firstly, the shop assistant sets the contents of his or her regular work into the remote controller, and defines corresponding keys (e.g., key "1" represents bulk goods weighing, key "2" represents bulk goods price modification, etc.); thus, the shop assistant can pre-configure this setting into the remote controller, which can greatly lower the complexity of work in daily use, and can bring about very good user experience because the corresponding work can be completed only by pressing one key.

Based on the same concept of invention, an embodiment of the present disclosure further provides an electronic shelf label information processing method, as described in the following embodiment. Since the principle for the electronic shelf label information processing method to solve the problem is similar to that for the electronic shelf label information processing system, thus the implementation of the electronic shelf label information processing method may refer to that of the electronic shelf label information processing system, and the repetitive contents are omitted herein.

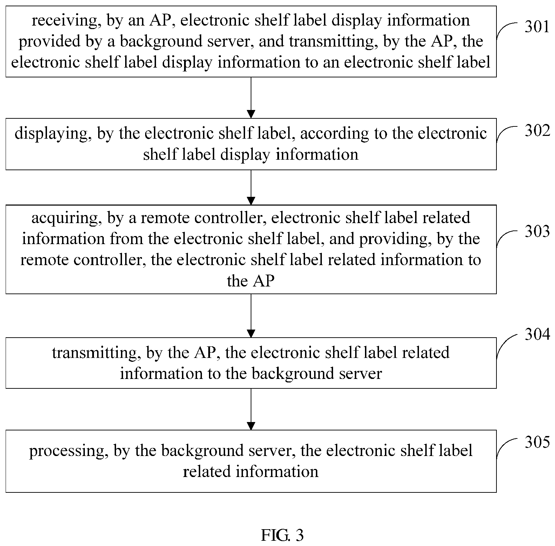

Fig. 3 is a flow chart of an electronic shelf label information processing method provided by an embodiment of the present disclosure. As illustrated in Fig. 3, the method comprises the following steps:
step 301: receiving, by an AP, electronic shelf label display information provided by a background server, and transmitting, by the AP, the electronic shelf label display information to an electronic shelf label;
step 302: displaying, by the electronic shelf label, according to the electronic shelf label display information;
step 303: acquiring, by a remote controller, electronic shelf label related information from the electronic shelf label, and providing, by the remote controller, the electronic shelf label related information to the AP;
step 304: transmitting, by the AP, the electronic shelf label related information to the background server; and
step 305: processing, by the background server, the electronic shelf label related information.

In implementation, the AP and the electronic shelf label interact by using a 2.4G wireless communication protocol, the AP and the remote controller interact by using a 2.4G wireless communication protocol, and the remote controller and the electronic shelf label interact by using a 2.4G wireless communication protocol.

In implementation, in an example which is useful for understanding the invention, the method further comprises:
the electronic shelf label related information comprises a display object identity in the electronic shelf label display information;
the remote controller provides a display object operation type to an AP;
the AP transmits the display object identity and the display object operation type to a background server; and
the background server performs an operation on display object information according to the display object identity and the display object operation type.

In implementation, in an example which is useful for understanding the invention, the method further comprises:
the background server updates the electronic shelf label display information according to an operation result of performing an operation on the display object information, and provides the updated electronic shelf label display information to the AP;
the AP transmits the updated electronic shelf label display information to the electronic shelf label; and
the electronic shelf label displays according to the updated electronic shelf label display information.

In implementation, the method further comprises:
the remote controller provides remote controller input information to the AP;
the AP transmits the remote controller input information to the background server; and
the background server processes the remote controller input information.

In implementation, the method further comprises:
the electronic shelf label related information comprises electronic shelf label identity;
the remote controller provides the electronic shelf label identity to the AP;
the AP transmits the electronic shelf label identity to the background server; and
the background server associates the electronic shelf label identity with the remote controller input information.

In implementation, the electronic shelf label related information comprises parameter information of the electronic shelf label.

In implementation, in an example which is useful for understanding the invention, the method further comprises:
the remote controller provides check information to the AP; and
the AP performs an integrity check of the information received from the remote controller according to the check information.

In implementation, the method further comprises:
after receiving the information provided by the AP, the electronic shelf label returns a response message to the AP; and
after receiving the information provided by the remote controller, the AP returns a response message to the remote controller.

In implementation, the remote controller acquiring the electronic shelf label related information from the electronic shelf label comprises:
the remote controller acquires the electronic shelf label related information from the electronic shelf label, after triggering a magnetic control switch in the electronic shelf label.

In summary, the electronic shelf label information processing system in the embodiment of the present disclosure comprises an access point AP, an electronic shelf label, a remote controller and a background server. The AP is configured to receive the electronic shelf label display information provided by the background server, and transmit the electronic shelf label display information to the electronic shelf label. After receiving the information provided by the AP, the electronic shelf label returns a response message to the AP, and then the electronic shelf label displays according to the electronic shelf label display information. The remote controller may acquire electronic shelf label related information from the electronic shelf label, and then provide the electronic shelf label related information to the AP. After receiving the electronic shelf label related information provided by the remote controller, the AP returns a response message to the remote controller, and then transmits the electronic shelf label related information to a background server. The background server processes the electronic shelf label related information. As compared with the related art, the electronic shelf label information processing system in the embodiments of the present disclosure realizes the bidirectional data interaction between the remote controller and the AP, and the bidirectional data interaction between the remote controller and the electronic shelf label.

A person skilled in the art shall appreciate that the embodiments of the present disclosure can be provided as method, system or computer program product. Thus, the present disclosure may be implemented in the form of hardware, software, or combination of hardware and software. In addition, the present disclosure may be implemented in the form of computer program product implemented in one or more computer readable storage mediums (including, but not limited to, magnetic disk memory, CD-ROM, optical memory, etc.) containing computer program codes therein.

The present disclosure is described with reference to the flow chart and/or block diagram of the method, the device (system) and the computer program product according to the embodiments of the present disclosure. It shall be appreciated that each flow and/or block in the flow chart and/or block diagram, or combinations of the flows and/or blocks in the flow diagram and/or block diagram can be realized by computer program instructions. Those computer program instructions can be provided to a general purpose computer, a special purpose computer, an embedded processor or a processor of other programmable data processing device to produce a machine, such that instructions executed by the computer or the processor of other programmable data processing device produce an apparatus for realizing the functions specified in one or more flows in the flow diagram and/or one or more blocks in the block diagram.

Those computer program instructions can also be stored in a computer readable memory capable of guiding the computer or other programmable data processing device to work in a specific manner, such that the instructions stored in the computer readable memory produce a manufacture article comprising an instruction apparatus which realizes the functions specified in one or more flows in the flow diagram and/or one or more blocks in the block diagram.

Those computer program instructions can also be loaded onto the computer or other programmable data processing device, so as to execute a series of operation steps thereon to produce a processing realized by the computer, such that the instructions executed on the computer or other programmable data processing device provide the steps for realizing the functions specified in one or more flows in the flow diagram and/or one or more blocks in the block diagram.

The above description is just preferred embodiments of the present disclosure, and is not used for limiting the present disclosure. As known to a person skilled in the art, the embodiments of the present disclosure may have various modifications and changes.

## Claims

1. An electronic shelf label information processing system, comprising:
an access point (AP), abbreviated AP;
an electronic shelf label;
a remote controller; and
a background server;
the AP is configured to receive electronic shelf label display information provided by the background server, and transmit the electronic shelf label display information to the electronic shelf label;
the electronic shelf label is configured to display according to the electronic shelf label display information;
the remote controller is configured to acquire electronic shelf label related information from the electronic shelf label, and provide the electronic shelf label related information to the AP;
the AP is further configured to transmit the electronic shelf label related information to the background server; and
the background server is configured to process the electronic shelf label related information,
**characterized in that** the electronic shelf label comprises a communication module, a magnetic control switch, a Micro Control Unit (MCU), abbreviated MCU, a display screen and an indicator lamp;
the communication module is configured to receive the electronic shelf label display information provided by the AP, and to transmit the electronic shelf label display information to the MCU;
the MCU is configured to control the display screen and/or the indicator lamp for displaying, according to the electronic shelf label display information;
wherein the electronic shelf label is arranged to store the electronic shelf label related information; wherein the AP and the electronic shelf label are arranged to interact by using a 2.4G wireless communication protocol;
the AP and the remote controller are arranged to interact by using a 2.4G wireless communication protocol;
**characterized in that**
the remote controller and the electronic shelf label are arranged to interact by using a 2.4G wireless communication protocol; the remote controller is a magnetic control device; and
the magnetic control switch and the MCU are configured so that the magnetic control switch, after being triggered by the remote controller, triggers the MCU to acquire the electronic shelf label related information, and makes the MCU provide the electronic shelf label related information to the remote controller through the communication module by using the 2.4G wireless communication protocol,
and wherein the remote controller is configured to receive the electronic shelf label related information directly from the electronic shelf label by using the 2.4G wireless communication protocol.

2. The electronic shelf label information processing system according to claim 1, **characterized in that** the remote controller is further configured to provide remote controller input information to the AP;
the AP is further configured to transmit the remote controller input information to the background server;
the background server is further configured to process the remote controller input information,
wherein the electronic shelf label related information comprises an electronic shelf label identity;
the AP is further configured to transmit the electronic shelf label identity to the background server; and
the background server is further configured to associate the electronic shelf label identity with the remote controller input information.

3. The electronic shelf label information processing system according to claim 1, **characterized in that** the display screen is an electronic paper display or a liquid crystal display, and the indicator lamp comprises a plurality of light emitting diodes, abbreviated LEDs) of different colors, or red, green, blue LEDs, abbreviated RGB LEDs, Wherein the MCU is configured to:
control, according to a pre-set flickering color, flickering frequency and/or flickering duty ratio, an LED of a corresponding color among the plurality of LEDs of different colors to flicker, if the indicator lamp is the plurality of LEDs of different colors;
control, according to a pre-set flickering color, flickering frequency and/or flickering duty ratio, the RGB LEDs to emit light of a corresponding color and flicker, if the indicator lamp is the RGB LEDs.

4. An electronic shelf label information processing method, comprising:
receiving (301), by an access point (AP), abbreviated AP, electronic shelf label display information provided by a background server, and transmitting (301), by the AP, the electronic shelf label display information to an electronic shelf label;
displaying (302), by the electronic shelf label, according to the electronic shelf label display information;
acquiring (303), by a remote controller, electronic shelf label related information directly from the electronic shelf label, and providing (303), by the remote controller, the electronic shelf label related information to the AP;
transmitting (304), by the AP, the electronic shelf label related information to the background server; and
processing (305), by the background server, the electronic shelf label related information,
**characterized in that** acquiring (303), by the remote controller, the electronic shelf label related information from the electronic shelf label comprising:
acquiring, by the remote controller, the electronic shelf label related information from the electronic shelf label, after triggering a magnetic control switch in the electronic shelf label,
wherein the electronic shelf label comprises a communication module, the magnetic control switch, a Micro Control Unit (MCU), abbreviated MCU,
display screen and an indicator lamp, wherein the communication module receives the electronic shelf label display information provided by the AP, and transmits the electronic shelf label display information to the MCU, the MCU controls the display screen and/or the indicator lamp for displaying, according to the electronic shelf label display information, wherein the electronic shelf label is arranged to store the electronic shelf label related information, wherein the AP and the electronic shelf label interact by using a 2.4G wireless communication protocol; the AP and the remote controller interact by using a 2.4G wireless communication protocol; the remote controller and the electronic shelf label interact by using a 2.4G wireless communication protocol;
wherein the remote controller is a magnetic control device, and the magnetic control switch, after being triggered by the remote controller, triggers the MCU to acquire the electronic shelf label related information, and makes the MCU provide the electronic shelf label related information to the remote controller through the communication module by using the 2.4G wireless communication protocol,
and wherein the remote controller receives the electronic shelf label related
information by using the 2.4G wireless communication protocol.

5. The electronic shelf label information processing method according to claim 4, **characterized in** further comprising:
providing, by the remote controller, remote controller input information to the AP;
transmitting, by the AP, the remote controller input information to the background server;
processing, by the background server, the remote controller input information,
the electronic shelf label related information comprising an electronic shelf label identity;
providing, by the remote controller, the electronic shelf label identity to the AP;
transmitting, by the AP, the electronic shelf label identity to the background server; and
associating, by the background server, the electronic shelf label identity with the remote controller input information.

## Patentansprüche

1. System zum Verarbeiten einer elektronischen Regaletikett-Information, enthaltend:
einen Zugangspunkt (AP), abgekürzt AP;
ein elektronisches Regaletikett;
eine Fernsteuerung; und
einen Hintergrundserver;
wobei der AP dazu ausgelegt ist, eine von dem Hintergrundserver bereitgestellte elektronische Regaletikett-Anzeigeinformation zu empfangen und die elektronische Regaletikett-Anzeigeinformation an das elektronische Regaletikett zu übertragen;
wobei das elektronische Regaletikett dazu ausgelegt ist, entsprechend der elektronischen Regaletikett-Anzeigeinformation anzuzeigen;
wobei die Fernsteuerung dazu ausgelegt ist, eine auf das elektronische Regaletikett bezogene Information von dem elektronischen Regaletikett zu erfassen und dem AP die auf das elektronische Regaletikett bezogene Information bereitzustellen;
wobei der AP ferner dazu ausgelegt ist, die auf das elektronische Regaletikett bezogene Information an den Hintergrundserver zu übertragen; und
wobei der Hintergrundserver dazu ausgelegt ist, die auf das elektronische Regaletikett bezogene Information zu verarbeiten,
**dadurch gekennzeichnet, dass** das elektronische Regaletikett ein Kommunikationsmodul, einen magnetischen Steuerschalter, eine Mikrosteuereinheit (MCU), abgekürzt MCU, einen Anzeige-Bildschirm und eine Kontrollleuchte enthält;
wobei das Kommunikationsmodul dazu ausgelegt ist, die von dem AP bereitgestellte elektronische Regaletikett-Anzeigeinformation zu empfangen und die elektronische Regaletikett-Anzeigeinformation an die MCU zu übertragen;
wobei die MCU dazu ausgelegt ist, den Anzeige-Bildschirm und/oder die Kontrollleuchte zum Anzeigen entsprechend der elektronischen Regaletikett-Anzeigeinformation anzusteuern;
wobei das elektronische Regaletikett dazu eingerichtet ist, die auf das elektronische Regaletikett bezogene Information zu speichern;
wobei der AP und das elektronische Regaletikett dazu eingerichtet sind, unter Verwendung eines 2.4G-Funk-Kommunikationsprotokolls zu interagieren;
wobei der AP und die Fernsteuerung dazu eingerichtet sind, unter Verwendung eines 2.4G-Funk-Kommunikationsprotokolls zu interagieren;
**dadurch gekennzeichnet, dass**
die Fernsteuerung und das elektronische Regaletikett dazu eingerichtet sind, unter Verwendung eines 2.4G-Funk-Kommunikationsprotokolls zu interagieren;
wobei die Fernsteuerung eine magnetische Steuervorrichtung ist; und
der magnetische Steuerschalter und die MCU so ausgelegt sind, dass der magnetische Steuerschalter, nachdem er von der Fernsteuerung ausgelöst wurde, die MCU auslöst, um die auf das elektronische Regaletikett bezogene Information zu erfassen, und die MCU veranlasst, der Fernsteuerung die auf das elektronische Regaletikett bezogene Information über das Kommunikationsmodul unter Verwendung des 2.4G-Funk-Kommunikationsprotokolls bereitzustellen,
und wobei die Fernsteuerung dazu ausgelegt ist, die auf das elektronische Regaletikett bezogene Information direkt von dem elektronischen Regaletikett unter Verwendung des 2.4G-Funk-Kommunikationsprotokolls zu empfangen.

2. System zum Verarbeiten einer elektronischen Regaletikett-Information nach Anspruch 1, **dadurch gekennzeichnet, dass** die Fernsteuerung ferner dazu ausgelegt ist, dem AP eine Fernsteuerungs-Eingabeinformation bereitzustellen;
wobei der AP ferner dazu ausgelegt ist, die Fernsteuerungs-Eingabeinformation an den Hintergrundserver zu übertragen;
wobei der Hintergrundserver ferner dazu ausgelegt ist, die Fernsteuerungs-Eingabeinformation zu verarbeiten,
wobei die auf das elektronische Regaletikett bezogene Information eine Identität des elektronischen Regaletiketts umfasst;
wobei der AP ferner dazu ausgelegt ist, die Identität des elektronischen Regaletiketts an den Hintergrundserver zu übertragen; und
wobei der Hintergrundserver ferner dazu ausgelegt ist, die Identität des elektronischen Regaletiketts mit der Eingabeinformation der Fernsteuerung zu verknüpfen.

3. System zum Verarbeiten einer elektronischen Regaletikett-Information nach Anspruch 1, **dadurch gekennzeichnet, dass** der Anzeige-Bildschirm eine elektronische Papieranzeige oder eine Flüssigkristallanzeige ist und die Kontrollleuchte eine Vielzahl von Leuchtdioden, abgekürzt LEDs, mit unterschiedlichen Farben oder rote, grüne, blaue LEDs, abgekürzt RGB-LEDs, umfasst,
wobei die MCU dazu ausgelegt ist, um
gemäß einer voreingestellten Flackerfarbe, Flackerfrequenz und/oder Flackertastverhältnis eine LED einer entsprechenden Farbe unter der Vielzahl von LEDs unterschiedlicher Farben anzusteuern, um zu flackern, wenn es sich bei der Kontrollleuchte um die Vielzahl von LEDs unterschiedlicher Farben handelt;
gemäß einer voreingestellten Flackerfarbe, Flackerfrequenz und/oder einem Flackertastverhältnis, die RGB-LEDs anzusteuern, um Licht einer entsprechenden Farbe zu emittieren und zu flackern, wenn es sich bei der Kontrollleuchte um die RGB-LEDs handelt.

4. Verfahren zum Verarbeiten einer elektronischen Regaletikett-Information, umfassend:
Empfangen (301) einer elektronischen Regaletikett-Anzeigeinformation, die von einem Hintergrundserver bereitgestellt wird, durch einen Zugriffspunkt (AP), abgekürzt AP, und
Übertragen (301) der elektronischen Regaletikett-Anzeigeinformation an ein elektronisches Regaletikett durch den AP;
Anzeigen (302) durch das elektronische Regaletikett gemäß der elektronischen Regaletikett-Anzeigeinformation;
Erfassen (303) einer auf das elektronische Regaletikett bezogenen Information direkt von dem elektronischen Regaletikett durch eine Fernsteuerung, und
Bereitstellen (303) der auf das elektronische Regaletikett bezogenen Information für den AP durch die Fernsteuerung;
Übertragen (304) der auf das elektronische Regaletikett bezogenen Information durch den AP an den Hintergrundserver; und
Verarbeiten (305) der auf das elektronische Regaletikett bezogenen Information durch den Hintergrundserver,
**dadurch gekennzeichnet, dass** das Erfassen (303) der auf das elektronische Regaletikett bezogenen Information von dem elektronischen Regaletikett durch die Fernsteuerung umfasst:
Erfassen der auf das elektronische Regaletikett bezogenen Information von dem elektronischen Regaletikett durch die Fernsteuerung, nachdem ein magnetischer Steuerschalter in dem elektronischen Regaletikett ausgelöst wurde,
wobei das elektronische Regaletikett ein Kommunikationsmodul, den magnetischen Steuerschalter, eine Mikrosteuereinheit (MCU), abgekürzt MCU, einen Anzeige-Bildschirm und eine Kontrollleuchte enthält, wobei das Kommunikationsmodul die von dem AP bereitgestellte elektronische Regaletikett-Anzeigeinformation empfängt und die elektronische Regaletikett-Anzeigeinformation an die MCU überträgt, wobei die MCU den Anzeige-Bildschirm und/oder die Kontrollleuchte zum Anzeigen gemäß der elektronischen Regaletikett-Anzeigeinformation ansteuert, wobei das elektronische Regaletikett dazu eingerichtet ist, die auf das elektronische Regaletikett bezogene Information zu speichern, wobei der AP und das elektronische Regaletikett unter Verwendung eines 2.4G-Funk-Kommunikationsprotokolls interagieren; wobei der AP und die Fernsteuerung unter Verwendung eines 2.4G-Funk-Kommunikationsprotokolls interagieren; wobei die Fernsteuerung und das elektronische Regaletikett unter Verwendung eines 2.4G-Funk-Kommunikationsprotokolls interagieren;
wobei die Fernsteuerung eine magnetische Steuervorrichtung ist; und der magnetische Steuerschalter, nachdem er von der Fernsteuerung ausgelöst wurde, die MCU auslöst, um die auf das elektronische Regaletikett bezogene Information zu erfassen, und die MCU veranlasst, der Fernsteuerung die auf das elektronische Regaletikett bezogene Information über das Kommunikationsmodul unter Verwendung des 2.4G-Funk-Kommunikationsprotokolls bereitzustellen,
und wobei die Fernsteuerung die auf das elektronische Regaletikett bezogene Information unter Verwendung des 2.4G-Funk-Kommunikationsprotokolls empfängt.

5. Verfahren zum Verarbeiten einer elektronischen Regaletikett-Information nach Anspruch 4,
**dadurch gekennzeichnet, dass** es ferner umfasst:
Bereitstellen einer Fernsteuerungs-Eingabeinformation für den AP durch die Fernsteuerung;
Übertragen der Fernsteuerungs-Eingabeinformation durch den AP an den Hintergrundserver;
Verarbeiten der Fernsteuerungs-Eingabeinformation durch den Hintergrundserver,
wobei die auf das elektronische Regaletikett bezogene Information eine Identität des elektronischen Regaletiketts umfasst;
Bereitstellen der Identität des elektronischen Regaletiketts für den AP durch die Fernsteuerung;
Übertragen der Identität des elektronischen Regaletiketts durch den AP an den Hintergrundserver; und
Verknüpfen der Identität des elektronischen Regaletiketts mit der Fernsteuerungs-Eingabeinformation durch den Hintergrundserver.

## Revendications

1. Système de traitement d'informations d'étiquette d'étagère électronique, comprenant :
un point d'accès (AP), AP en abrégé ;
une étiquette d'étagère électronique ;
un contrôleur distant ; et
un serveur d'arrière-plan ; dans lequel
le point AP est configuré de manière à recevoir des informations d'affichage d'étiquette d'étagère électronique fournies par le serveur d'arrière-plan, et à transmettre les informations d'affichage d'étiquette d'étagère électronique à l'étiquette d'étagère électronique ;
l'étiquette d'étagère électronique est configurée de manière à s'afficher selon les informations d'affichage d'étiquette d'étagère électronique ;
le contrôleur distant est configuré de manière à acquérir des informations connexes à l'étiquette d'étagère électronique, à partir de l'étiquette d'étagère électronique, et à fournir les informations connexes à l'étiquette d'étagère électronique au point AP ;
le point AP est en outre configuré de manière à transmettre les informations connexes à l'étiquette d'étagère électronique au serveur d'arrière-plan ; et
le serveur d'arrière-plan est configuré de manière à traiter les informations connexes à l'étiquette d'étagère électronique ;
**caractérisé en ce que** l'étiquette d'étagère électronique comprend un module de communication, un commutateur à commande magnétique, une micro-unité de commande (MCU), MCU en abrégé, un écran d'affichage et un indicateur lumineux ;
le module de communication est configuré de manière à recevoir les informations d'affichage d'étiquette d'étagère électronique fournies par le point AP, et à transmettre les informations d'affichage d'étiquette d'étagère électronique à la micro-unité MCU ;
la micro-unité MCU est configurée de manière à commander l'écran d'affichage et/ou l'indicateur lumineux à des fins d'affichage, selon les informations d'affichage d'étiquette d'étagère électronique ;
dans lequel l'étiquette d'étagère électronique est agencée de manière à stocker les informations connexes à l'étiquette d'étagère électronique ;
dans lequel le point AP et l'étiquette d'étagère électronique sont agencés de manière à interagir en utilisant un protocole de communication sans fil 2.4G ;
le point AP et le contrôleur distant sont agencés de manière à interagir en utilisant un protocole de communication sans fil 2.4G ;
**caractérisé en ce que** :
le contrôleur distant et l'étiquette d'étagère électronique sont agencés de manière à interagir en utilisant un protocole de communication sans fil 2.4G ;
le contrôleur distant est un dispositif à commande magnétique ; et
le commutateur à commande magnétique et la micro-unité MCU sont configurés de sorte que le commutateur à commande magnétique, après avoir été déclenché par le contrôleur distant, déclenche la micro-unité MCU pour acquérir les informations connexes à l'étiquette d'étagère électronique, et amène la micro-unité MCU à fournir les informations connexes à l'étiquette d'étagère électronique au contrôleur distant, par l'intermédiaire du module de communication, en utilisant le protocole de communication sans fil 2.4G ; et
dans lequel le contrôleur distant est configuré de manière à recevoir les informations connexes à l'étiquette d'étagère électronique, directement en provenance de l'étiquette d'étagère électronique, en utilisant le protocole de communication sans fil 2.4G.

2. Système de traitement d'informations d'étiquette d'étagère électronique selon la revendication 1, **caractérisé en ce que** le contrôleur distant est en outre configuré de manière à fournir des informations d'entrée de contrôleur distant au point AP ;
le point AP est en outre configuré de manière à transmettre les informations d'entrée de contrôleur distant au serveur d'arrière-plan ;
le serveur d'arrière-plan est en outre configuré de manière à traiter les informations d'entrée de contrôleur distant ;
dans lequel les informations connexes à l'étiquette d'étagère électronique comprennent une identité d'étiquette d'étagère électronique ;
le point AP est en outre configuré de manière à transmettre l'identité d'étiquette d'étagère électronique au serveur d'arrière-plan ; et
le serveur d'arrière-plan est en outre configuré de manière à associer l'identité d'étiquette d'étagère électronique aux informations d'entrée de contrôleur distant.

3. Système de traitement d'informations d'étiquette d'étagère électronique selon la revendication 1, **caractérisé en ce que** l'écran d'affichage est un affichage sur papier électronique ou un affichage à cristaux liquides, et l'indicateur lumineux comprend une pluralité de diodes électroluminescentes, LED en abrégé, de différentes couleurs, ou des diodes LED rouges, vertes, bleues, RGB LED en abrégé ;
dans lequel la micro-unité MCU est configurée de manière à :
commander, selon une couleur de scintillation prédéfinie, une fréquence de scintillation prédéfinie et/ou un facteur de marche de scintillation prédéfini, la scintillation d'une diode LED d'une couleur correspondante, parmi la pluralité de diodes LED de différentes couleurs, si l'indicateur lumineux correspond à la pluralité de diodes LED de différentes couleurs ; et
commander, selon une couleur de scintillation prédéfinie, une fréquence de scintillation prédéfinie et/ou un facteur de marche de scintillation prédéfini, aux diodes RGB LED d'émettre une lumière d'une couleur correspondante, et de scintiller, si l'indicateur lumineux correspond aux diodes RGB LED.

4. Procédé de traitement d'informations d'étiquette d'étagère électronique, comprenant les étapes ci-dessous consistant à :
recevoir (301), par le biais d'un point d'accès (AP), AP en abrégé, des informations d'affichage d'étiquette d'étagère électronique fournies par un serveur d'arrière-plan, et transmettre (301), par le biais du point AP, les informations d'affichage d'étiquette d'étagère électronique, à une étiquette d'étagère électronique ;
effectuer un affichage (302), par le biais de l'étiquette d'étagère électronique, selon les informations d'affichage d'étiquette d'étagère électronique ;
acquérir (303), par le biais d'un contrôleur distant, des informations connexes à l'étiquette d'étagère électronique, directement à partir de l'étiquette d'étagère électronique, et fournir (303), par le biais du contrôleur distant, les informations connexes à l'étiquette d'étagère électronique, au point AP ;
transmettre (304), par le biais du point AP, les informations connexes à l'étiquette d'étagère électronique, au serveur d'arrière-plan ; et
traiter (305), par le biais du serveur d'arrière-plan, les informations connexes à l'étiquette d'étagère électronique ;
**caractérisé en ce que** l'étape d'acquisition (303), par le biais du contrôleur distant, des informations connexes à l'étiquette d'étagère électronique, à partir de l'étiquette d'étagère électronique, comprend les étapes ci-dessous consistant à :
acquérir, par le biais du contrôleur distant, les informations connexes à l'étiquette d'étagère électronique, à partir de l'étiquette d'étagère électronique, après le déclenchement d'un commutateur à commande magnétique dans l'étiquette d'étagère électronique ;
dans lequel l'étiquette d'étagère électronique comprend un module de communication, le commutateur à commande magnétique, une micro-unité de commande (MCU), MCU en abrégé, un écran d'affichage et un indicateur lumineux ;
dans lequel le module de communication reçoit les informations d'affichage d'étiquette d'étagère électronique fournies par le point AP, et transmet les informations d'affichage d'étiquette d'étagère électronique à la micro-unité MCU, la micro-unité MCU commande l'écran d'affichage et/ou l'indicateur lumineux à des fins d'affichage, selon les informations d'affichage d'étiquette d'étagère électronique, dans lequel l'étiquette d'étagère électronique est agencée de manière à stocker les informations connexes à l'étiquette d'étagère électronique, dans lequel :
le point AP et l'étiquette d'étagère électronique interagissent en utilisant un protocole de communication sans fil 2.4G ; le point AP et le contrôleur distant interagissent en utilisant un protocole de communication sans fil 2.4G ; le contrôleur distant et l'étiquette d'étagère électronique interagissent en utilisant un protocole de communication sans fil 2.4G ;
dans lequel le contrôleur distant est un dispositif à commande magnétique, et le commutateur à commande magnétique, après avoir été déclenché par le contrôleur distant, déclenche la micro-unité MCU en vue d'acquérir les informations connexes à l'étiquette d'étagère électronique, et amène la micro-unité MCU à fournir les informations connexes à l'étiquette d'étagère électronique, au contrôleur distant, par le biais du module de communication, en utilisant le protocole de communication sans fil 2.4G ; et
dans lequel le contrôleur distant reçoit les informations connexes à l'étiquette d'étagère électronique, en utilisant le protocole de communication sans fil 2.4G.

5. Procédé de traitement d'informations d'étiquette d'étagère électronique selon la revendication 4, **caractérisé en ce qu'**il comprend en outre les étapes ci-dessous consistant à :
fournir, par le biais du contrôleur distant, des informations d'entrée de contrôleur distant, au point AP ;
transmettre, par le biais du point AP, les informations d'entrée de contrôleur distant, au serveur d'arrière-plan ;
traiter, par le biais du serveur d'arrière-plan, les informations d'entrée de contrôleur distant, dans lequel les informations connexes à l'étiquette d'étagère électronique comprennent une identité d'étiquette d'étagère électronique ;
fournir, par le biais du contrôleur distant, l'identité d'étiquette d'étagère électronique, au point AP ;
transmettre, par le biais du point AP, l'identité d'étiquette d'étagère électronique, au serveur d'arrière-plan ; et
associer, par le biais du serveur d'arrière-plan, l'identité d'étiquette d'étagère électronique aux informations d'entrée de contrôleur distant.
